# EUROPEAN PATENT SPECIFICATION

(11) **EP 0 932 754 B1**
(45) Date of publication and mention of the grant of the patent: **16.08.2001**
(21) Application number: 97945001.2
(22) Date of filing: 13.10.1997
(51) Int. Cl.: F02D 41/14

(54) **REDUCING NOx EMISSION FROM AN ENGINE**
REDUKTION DES NOx AUSSTOSSES EINES MOTORS
REDUCTION DES EMISSIONS DE NOx D'UN MOTEUR

(30) Priority: 17.10.1996 GB 9621639
(43) Date of publication of application: 04.08.1999
(73) Proprietor: Ford Global Technologies, Inc., Dearborn, Michigan 48126 (US)
(72) Inventor: MARSHALL, Robert Anthony, Braintree, Essex CM7 5BA (GB)
(74) Representative: Messulam, Alec Moses
(86) International application number: GB9702809
(87) International publication number: WO9817906

(56) References cited:
- EP-A- 0 555 870
- DE-C- 19 543 219
- PATENT ABSTRACTS OF JAPAN vol. 095, no. 011, 26 December 1995 & JP 07 208232 A (TOYOTA MOTOR CORP), 8 August 1995,

## Description

### Field of the invention

The present invention relates to reducing the NOₓ emissions from a lean burn internal combustion engine fitted with an NOₓ trap.

### Description of the prior art

Internal combustion engines designed mostly to burn a mixture lean of stoichiometry tend to produce NOₓ gases in the exhaust feed gas and in order to comply with emission regulations it is necessary to intercept and neutralise these gases in the exhaust system before they are discharged into the ambient atmosphere.

It is known to use an NOₓ trap to store the gases and to purge the trap by creating a rich (i.e. reducing) atmosphere in the exhaust system. More specifically, a reversible chemical reaction takes place in the NOₓ trap. In the presence of an oxidising atmosphere in the exhaust system, NOₓ gases react with the material in the trap and are stored in the trap in the form of a nitrate. At a later stage, when the trap is estimate to be approaching its maximum storage capacity, a purge cycle is initiated in which excess fuel is supplied to the engine for a brief interval. The stored NOₓ gases are released and react with excess fuel in the exhaust gases to be reduced to nitrogen before being discharged into the ambient atmosphere.

It is not practicable for various reasons to operate in lean burn mode at all times. In particular, when the engine is idling and during low speed and low load operation, combustion cannot be easily controlled in lean burn mode resulting in engine instability. Also at higher engine speeds and loads it is preferred to operate the engine at stoichiometry. One reason for this is that the efficiency of the NOₓ trap reduces with temperature and at higher speeds and loads it fills too rapidly and requires purging too frequently.

It is common therefore for the engine management system of a lean burn engine to be able to switch between modes, supplying a stoichiometric mixture under some operating conditions and a lean mixture at other times.

Whereas the lean burn mode relies on an open loop calibration, in order to maintain stoichiometry the management system normally operates in a closed loop mode relying on the feedback error signal from a heated exhaust gas oxygen (HEGO) sensor, the output signal of which switches between two states depending on the oxygen concentration in the exhaust gases. The closed loop control system acts in the presence of surplus oxygen to enrich the mixture strength and in the sensed based of oxygen to reduce the mixture strength, with the result that the fuel to air ratio is dithered about stoichiometry.

A problem that has been encountered with an engine that can operate in lean burn and stoichiometric mode is that on reverting to the stoichiometric mode after a period of lean burn, NOx gases tend to leak out of the trap. Because there are not sufficient reducing agents (hydrocarbons and carbon monoxide) present in the exhaust gases to react with the released NOₓ gases, these gases leak out and are discharged into the ambient atmosphere.

### Object of the invention

The present invention therefore seeks to avoid leakage of NOₓ gases from the exhaust system when the engine reverts to closed loop stoichiometric operation after a period of lean burn operation.

### Summary of the invention

According to the present invention, there is provided an internal combustion engine having an exhaust system that includes an NOₓ trap and an exhaust gas oxygen sensor, and a management system for alternately operating the engine in a lean burn mode, during which NOₓ gases produced by the engine are stored in the trap and a closed loop mode in which the mixture strength is oscillated about stoichiometry in dependence upon the output signal of the exhaust gas oxygen sensor located in the engine exhaust system, characterised in that the response of the management system to the output signal of the exhaust gas oxygen sensor when operating in closed loop mode is biased to create, when averaged over time, a slightly lean condition in the exhaust system to prevent the release of the NOₓ gases stored in the trap.

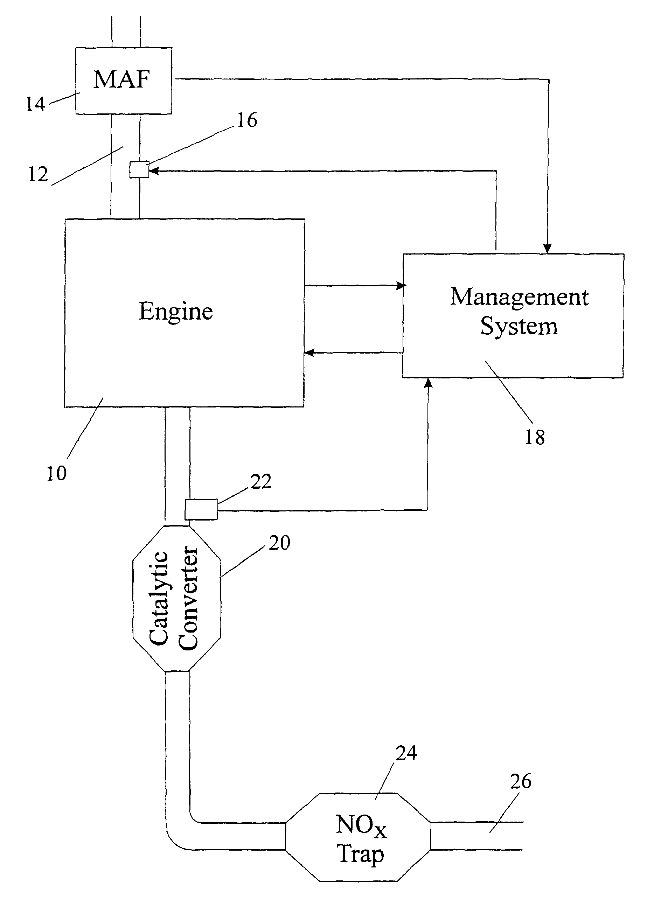

### Brief description of the drawing

The invention will now be described further, by way of example, with reference to the accompanying drawing, which is block diagram of an engine.

### Detailed description of the preferred embodiment

In the drawing, an internal combustion engine 10 has an intake manifold 12 incorporating an intake mass air flow meter 14 and fuel injectors 16, and an exhaust pipe 26 incorporating a catalytic converter 20 and a NOₓ trap 24. The engine fuel mixture strength and spark timing are set by means of a computerised engine management system 18 that receives input signals from the engine representing engine operating parameters such as crankshaft position and engine temperature. The management system also receives a signal from at least one HEGO sensor 22 which may be located downstream but more preferably upstream of the catalytic converter 20 as well as the output signal from the mass air flow meter 14 located in the intake manifold.

The management system 18 can operate in one of three modes. In the first mode, open loop calibration is used to set a lean mixture. In other words, based on the sensed engine speed and load, the optimum fuel injection quantity for the prevailing operating conditions is computed, or read from a look-up table, and the quantity of fuel injected by the fuel injectors during each engine cycle is controlled by setting the width of the pulses applied to the injectors 16.

The second mode is a purge mode which again relies on open loop calibration to supply a rich mixture to the engine for a brief period to purge the NOₓ trap. The engine management system 18 estimates at all times, by the use of a mathematical model, the quantity of NOₓ gases stored in the trap and initiates a purge mode cycle when necessary to avoid the storage capacity of the NOₓ trap being exceeded.

In the third mode, the management system 18 operates in a closed loop configuration to maintain stoichiometry using a feedback signal from the HEGO sensor 22. The output signal of the HEGO sensor adopts one state when oxygen is present in the exhaust gases and another when the presence of oxygen is not detected. If a surplus of oxygen is detected, the mixture is made richer until in due course no oxygen is sensed by the HEGO sensor 22. At this point, the management system again reduces the mixture strength. In this way, the average mixture strength is maintained at stoichiometry, with the gases in the exhaust system dithering between oxidising gases and reducing gases.

The management system 18 selects between lean burn open loop mode and stoichiometric closed loop mode in dependence upon the prevailing operating conditions in or to optimise combustion stability, fuel economy, maximum power and emissions.

When the engine changes from a lean burn mode to a stoichiometric mode, there is a tendency for the NOₓ trap to leak as there are times when a reducing atmosphere is present in the exhaust system. If such stored gases are released prematurely, there will not be enough reducing agents present in the exhaust gases to neutralise them and they will be discharged untreated from the exhaust system.

To avoid this problem, the management system 18 and the HEGO sensor 22 are biased to hold longer on the lean side of stoichiometry and thereby create a slightly lean condition in the exhaust system to prevent the release of the NOₓ gases stored in the trap.

More particularly, the rate at which the amount of fuel supplied to the engine is changed by the management system depends on whether the mixture is sensed by the HEGO sensor 22 to be rich or lean of stoichiometry. When the mixture is sensed to be rich, the fuel quantity is reduced relatively rapidly to return the mixture to a lean value. On the other hand, when the mixture is sensed to be lean, the fuel quantity is increased relatively slowly so that the mixture remains lean for a longer time before returning to a rich value. Consequently, overall the lean excursions of the mixture have a longer duration that the rich excursions and on average the mixture in the exhaust system remains lean and thereby inhibits the undesired release of NOₓ from the filter trap.

It should be mention that biasing the HEGO sensor and management system in this manner is known per se and is used for controlling a three way catalyst in order to maintain all three types of exhaust emission (HC, CO and NOₓ) under tight control. The invention proposes using this known technique to present premature release of NOₓ from an NOₓ trap.

## Claims

1. An internal combustion engine (10) having an exhaust system that includes an NOₓ trap (24) and an exhaust gas oxygen sensor (22), and a management system (18) for selectively operating the engine in a lean burn mode, during which NOₓ gases produced by the engine (10) are stored in the NOₓ trap (24) and a closed loop mode in which the mixture strength is oscillated about stoichiometry in dependence upon the output signal of the exhaust gas oxygen sensor (22) located in the engine exhaust system, characterised in that the response of the management system to the output signal of the exhaust gas oxygen sensor (22) when operating in closed loop mode is biased to create, when averaged over time, a slightly lean condition in the exhaust system to prevent the release of the NOₓ gases stored in the trap.

## Patentansprüche

1. Ein Verbrennungsmotor (10), der ein Abgassystem besitzt welches eine NOₓ-Falle (24) und einen Abgas-Sauerstoffsensor (22) einschließt; und ein Managementsystem (18), um den Motor selektiv in einem Magerverbrennungs-Modus, in welchem vom Motor (10) erzeugte NOₓ-Gase in der Falle (24) gespeichert werden, und in einem Modus mit geschlossenem Regelkreis zu betreiben, in welchem die Mischungsstärke abhängig vom Ausgabesignal des im Motor-Abgassystem angeordneten Abgas-Sauerstoffsensors (22) um die Stöchiometrie schwingt; dadurch gekennzeichnet daß - wenn im Modus mit geschlossenem Regelkreis gearbeitet wird ― die Erwiderung des Management-Systems auf das Ausgabesignal des Abgas-Sauerstoffsensors (22) vorbelastet ist, um - wenn über die Zeit gemittelt wird ― im Abgassystem einen geringfügig mageren Zustand zu schaffen, um die Freigabe der in der Falle gespeicherten NOₓ-Gase zu vermeiden.

## Revendications

1. Moteur à combustion interne (10) comportant un système d'échappement qui comprend un piège à NOₓ (24) et un détecteur d'oxygène des gaz d'échappement (22), ainsi qu'un système de gestion (18) destiné à faire fonctionner de facon sélective le moteur dans un moteur à combustion pauvre, durant lequel les gaz NOₓ produits dans le moteur (10) sont stockés dans le piège à NOₓ (24) et un mode en boucle fermée dans lequel la force du mélange est amenée à osciller autour de la stoechiométrie suivant le signal de sortie du détecteur d'oxygène des gaz d'échappement (22) situé dans le système d'échappement du moteur, caractérisé en ce que la réponse du système de gestion au signal de sortie du détecteur d'oxygène des gaz d'échappement (22) lors d'un fonctionnement en mode en boucle fermée est décalé afin de créer, lorsqu'elle est mise en moyenne sur le temps, une condition légèrement pauvre dans le système d'échappement afin d'empêcher la libération des gaz NOₓ stockés dans le piège.
